# EUROPEAN PATENT SPECIFICATION

(11) **EP 3 090 150 B1**
(45) Date of publication and mention of the grant of the patent: **30.01.2019**
(21) Application number: 14833538.3
(22) Date of filing: 11.12.2014
(51) Int. Cl.: F16H 21/36, F01L 7/04, F01B 7/14, F02B 75/28, F16H 21/18

(54) **RECIPROCATING POSITIVE-DISPLACEMENT MACHINE WITH AN AUTOMATIC WORK FLUID TIMING DEVICE**
OSZILLIERENDE VERDRÄNGERMASCHINE MIT AUTOMATISCHER ARBEITSFLUID-TIMING-VORRICHTUNG
MACHINE À DÉPLACEMENT DE VA-ET-VIENT POSITIF À DISPOSITIF DE PROGRAMMATION DE FLUIDE ACTIF AUTOMATIQUE

(30) Priority: 11.12.2013 IT TO20130175
(43) Date of publication of application: 09.11.2016
(73) Proprietor: Vallacqua, Giulio, 11100 Aosta (IT)
(72) Inventor: Vallacqua, Giulio, 11100 Aosta (IT)
(74) Representative: Giannini, Manuela
(86) International application number: PCT/IB2014/066816
(87) International publication number: WO 2015/087281

(56) References cited:
- FR-A- 454 107
- GB-A- 2 432 398
- US-A- 2 781 749
- US-A- 5 351 657
- US-A- 5 517 952

## Description

### TECHNICAL FIELD

The present invention relates to a reciprocating positive-displacement machine with an automatic work fluid timing device.

### BACKGROUND ART

In engineering, the term 'reciprocating positive-displacement machine' generally refers to an assembly of mechanical parts defining chambers, the volume of which is varied periodically by moving parts moving with respect to fixed parts.

Machines of this sort necessarily operate 'cyclically', in the sense that the work fluid (gas, steam or liquid) is admitted periodically into the work chambers and then expelled.

Reciprocating positive-displacement machines are divided into driving machine, or reciprocating engines, which convert the pressure energy of the fluid intake to mechanical energy at an output shaft; and operating machines, which receive mechanical energy from an external motor and supply pressure energy to the fluid, which in pumps is a liquid, and in compressors is an aeriform.

In reciprocating positive-displacement machines, energy is normally converted by means of a fixed cylinder, in which reciprocates axially a piston connected to a crank mechanism, known as a connecting-rod-crank or ordinary crank mechanism, comprising a crank connected to the power transfer shaft, and a connecting rod hinged at its big end to the crank, and at its small end to a pin integral with the piston.

As the volume inside the cylinder varies periodically, the work fluid is admitted or expelled through openings or ports, which communicate with intake and exhaust conduits, and are opened and closed alternately by valves, depending on the operating cycle of the machine.

The valves in operating machines such as compressors or pumps are usually controlled, but may also operate automatically : the difference in work fluid pressure between the inside and outside of the cylinder opens the valves on overcoming the resistance of the springs holding the valves in the normal closed position, and closes the valves by pushing them further against their respective seats.

In liquid, gas or steam reciprocating engines with ordinary crank mechanisms, the pressure differences are the opposite to those of compressors and pumps, which means the valves cannot be operated automatically and must therefore be controlled.

The valves are normally so-called poppet valves, or slide valves, also known as gate valves, and the timing mechanism comprises a number of dedicated timing components controlled indirectly by the machine's power mechanism.

Poppet valves, which are found, for example, in most four-stroke engines, are normally operated by a dedicated timing mechanism normally comprising a camshaft for timing the valves; a transmission for transmitting motion from the drive shaft to the camshaft; and a number of components, such as followers, rocker arms, rods and springs, interposed between the respective valves and the camshaft to control opening and closing of the valves.

Slide valves are normally in the form of sliding mechanisms (as in certain pneumatic actuators and steam machines), disk valves, conical or cylindrical plug valves fitted to the cylinder head, or movable sheaths, and are normally operated by dedicated timing mechanisms, such as articulated lever systems, separate from the power mechanism.

An automatically timed slide valve system, i.e. with slide valves controlled directly by the power shaft, is only found in multicylinder solutions, in which a fixed or rotary timing element caters sequentially to a number of respectively rotating or fixed cylinders bunched axially or radiating inside a drum.

Except for sequential automatic timing of multiple cylinders, which is only suitable for compressors, pumps or hydraulic motors, no automatic timing solutions for single fixed cylinder machines are known, in which the slide valves are operated directly by component parts of the power crank mechanism, without recourse to other specific mechanisms.

Only in the case of two-stroke engines does the operating cycle of the machine allow the work fluid to be timed directly by the power mechanism. More specifically, in two-stroke engines, the valves are defined by openings formed in the cylinder wall and so located as to be opened and closed by the piston reciprocating along the cylinder, and so perform a work cycle for each back and forth stroke of the piston.

An automatic timing solution such as this, employing simply the reciprocating movement of the piston, cannot be employed in a four-stroke internal combustion engine. In which case, the valves would open and close repeatedly in the same way for every two strokes of the piston, i.e. for each turn of the crank, instead of every four strokes of the piston, i.e. every two turns of the crank, as required in a four-stroke engine.

For this reason, in most four-stroke engines, the power mechanism controls gas admission and exhaust indirectly by means of an assembly of moving parts known as a timing system, which comprises intake and exhaust, typically poppet, valves for opening and closing respective openings in the cylinder; and a valve control mechanism. As stated, the valve control mechanism normally comprises a camshaft for timing the valves; a transmission for transmitting motion from the drive shaft to the camshaft; and a number of parts, such as followers, rocker arms, rods and springs, interposed between the respective valves and the camshaft to control opening and closing of the valves.

The absence of a timing system of the type used in four-stroke engines normally not only makes two-stroke engines easier and cheaper to produce and more reliable because of the smaller number of moving parts, but also provides for larger gas flow openings and a mechanically quieter engine, on account of the slide valves not being subject to shock and vibration typical of poppet valves.

Other internal combustion engine issues are the increasingly strict regulations governing fuel consumption and harmful emissions. Accordingly, internal combustion engines are known to be equipped with mechanical-thermodynamic devices designed to salvage at least some of the energy contained in the still-hot, compressed exhaust gases. Turbosuperchargers are one example of such devices. The useful work achieved by them, however, is normally only used to compress the air supply to the reciprocating engine, so, at high loads, the gas energy is in excess, and most of it is lost by being diverted to the silencer, i.e. the muffler, by the overpressure valve or so-called 'waste gate'.

To enhance energy efficiency, the tendency is not only to increase the expansion ratio with respect to the compression ratio in the cylinders by appropriately timing the valves, but also to deactivate some (e.g. two out of four) of the cylinders, i.e. reduce actual engine displacement, at medium-low loads and engine speeds, again using special valve control devices.

Valve timing is also modified according to the operating conditions (speed and thermal load) of the engine, to achieve maximum efficiency of the thermodynamic cycle.

All these systems for reducing consumption, and so improving thermodynamic efficiency, of the machine obviously call for additional mechanical and electronic devices, which inevitably complicate the design of the machine considerably, with all the drawbacks this entails in terms of cost and reliability.

US 5 351 657 A discloses a rotary power device of modular construction in which one or more pistons are reciprocably received in a cylinder sleeve, and the sleeve is rotatably supported in a bore within a housing. A cam and follower mechanism acting between the housing and piston governs reciprocating motion of the piston(s) within the sleeve. Rotary power can be extracted from the sleeve, or reciprocating power can be extracted from the piston(s). The rotating cylinder functions as a sleeve valve and permits, depending on the porting, use of the device as a gas-expansion engine (e.g. steam or compressed air) or pump, or as a two-stroke or four stroke internal combustion engines using spark or compression ignition.

US 2 781 749 A discloses an outboard motor comprising a housing, a pair of parallel spaced crankshafts rotatably journaled in the housing, a cylinder arranged between the crankshafts, reciprocating opposed pistons slidable in the cylinder and operatively connected to the crankshafts, a tubular sleeve valve rotatable in the cylinder, and means interconnecting each end of the valve and the crankshafts for transmitting the power from one crankshaft to the other for simultaneous rotation of the crankshafts and rotation of the sleeve valve.

### DISCLOSURE OF INVENTION

It is an object of the present invention to provide a reciprocating positive-displacement machine comprising a straightforward, low-cost, automatic timing device usable in both driving machines and operating machines and regardless of the nature of the liquid or aeriform work fluid, and the type of work cycle performed by the machine.

A further object of the present invention is to provide a reciprocating positive-displacement machine comprising an automatic work fluid timing device, and designed to operate as an internal combustion engine exhaust gas expander connectable mechanically at high loads and disconnectable at low engine speeds.

According to the present invention, there is provided a reciprocating positive-displacement machine as claimed in claims 1 and 5 and preferably in any one of the claims depending directly or indirectly on claims 1 or 5.

### BRIEF DESCRIPTION OF THE DRAWINGS

A number of non-limiting embodiments of the present invention will be described by way of example with reference to the attached drawings, in which :
Figure 1 shows a simplified operating view in perspective of a first embodiment of the machine according to the present invention;
Figure 2 shows a schematic lateral elevation of the Figure 1 machine;
Figure 3 shows a variation of the Figure 2 machine;
Figure 4 shows an exploded detail of the Figure 1 machine;
Figures 5 and 6 show cross sections along lines I-I and II-II respectively in Figure 1;
Figures 7 to 11 show operating diagrams of a sequence of operating positions of the Figure 1 machine;
Figure 12 shows a simplified operating view in perspective of a second embodiment of the machine according to the present invention;
Figure 13 shows a schematic lateral elevation of the Figure 12 machine;
Figure 14 shows a variation of the Figure 13 machine;
Figure 15 shows a view in perspective of a detail of the Figure 12 machine;
Figures 16 to 24 show operating diagrams of a sequence of operating positions of the Figure 12 machine;
Figure 25 shows a schematic example of a Figure 1 machine used as an exhaust gas expander in a drive unit comprising an internal combustion engine;
Figure 26 shows a larger-scale detail of Figure 25;
Figures 27 and 28 show operating graphs of the Figure 25 drive unit.

### BEST MODE FOR CARRYING OUT THE INVENTION

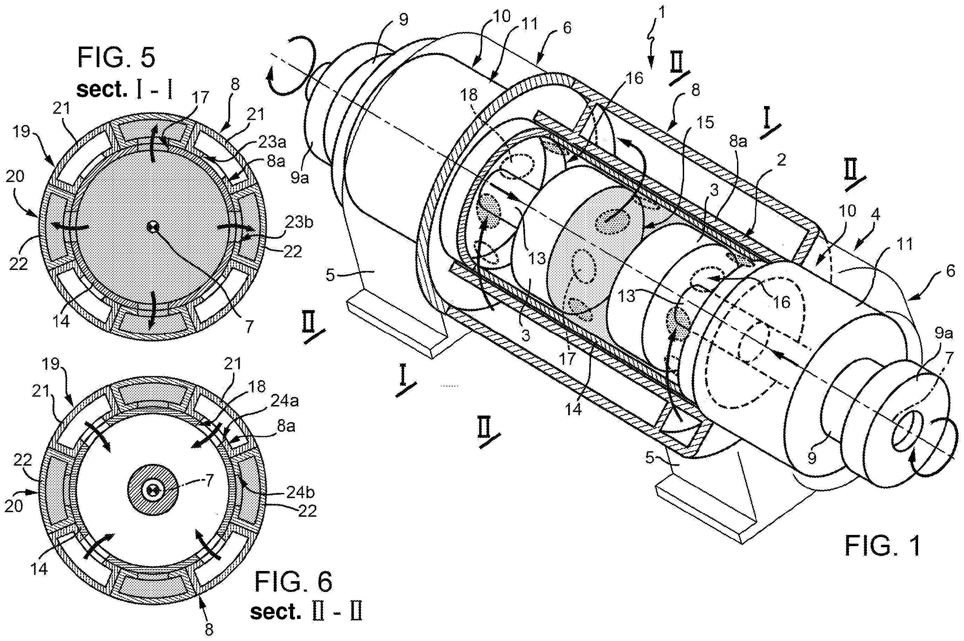

Number 1 in Figure 1 indicates as a whole a reciprocating positive-displacement machine comprising an automatic work fluid timing device 2.

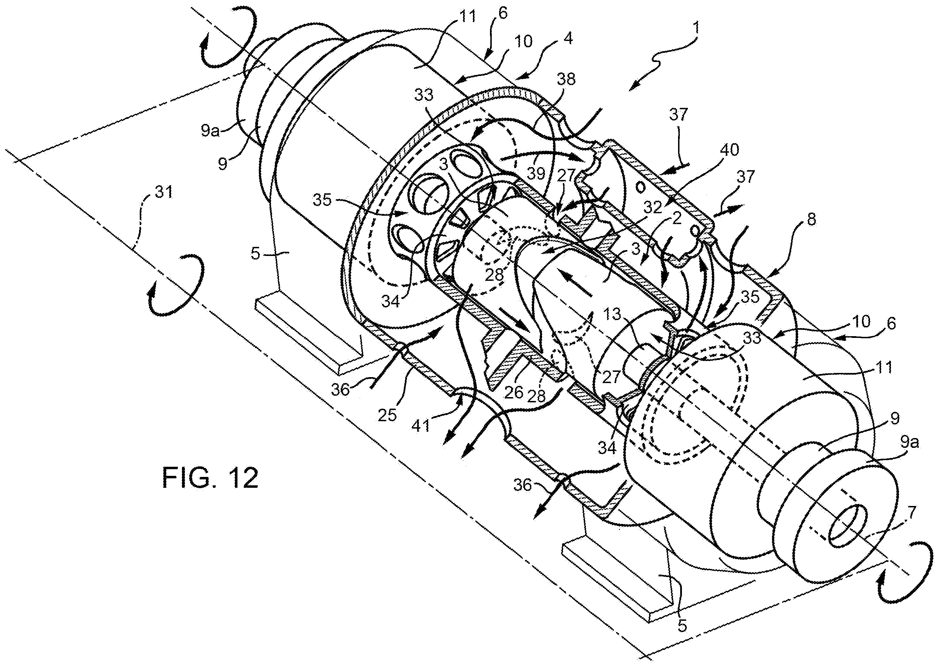

First, it is important to point out that the types of positive-displacement machines shown in Figures 1 and 12 are purely indicative. In fact, the concept underlying the present invention applies to reciprocating positive-displacement machines of any type, be they driving machines, such as internal combustion engines and external combustion compressed air, steam or gas hydraulic engines, or operating machines, such as pumps and compressors.

In the Figure 1 example, machine 1 is an air-powered engine, in which the energy of a work fluid, such as air or compressed gas, is converted to mechanical energy by the reciprocating linear movement of two opposed pistons 3.

Machine 1 comprises a casing 4 fitted rigidly to a base 5 and defined by a hollow body comprising two end shells 6 aligned along an axis 7, and a hollow centre body 8 - for the purpose explained below - coaxial with axis 7 and connecting shells 6 integrally to each other.

Machine 1 is substantially specular with respect to a centre plane perpendicular to axis 7, through the centre line of hollow body 8, and which theoretically divides machines 1 into two halves, each of which comprises one of opposed pistons 3, and a power output drive shaft 9 (or power input shaft, in the case of an operating machine 1) coaxial with axis 7 and for transmitting mechanical power to the outside via a gear 9a or any other suitable transmission means.

Each piston 3 is mounted to reciprocate along axis 7 under the control of a respective mechanism 10 of the type described in the International Application filed by the present Applicant concurrently with the present Application, and to which full reference is made herein.

With reference to the description and Figures 1-13 in said International Application, mechanism 10 is generally interposed between respective piston 3 and drive shaft 9 to transfer mechanical power from one to the other.

In the case of a driving machine, mechanism 10 transfers mechanical power from piston 3 to drive shaft 9 to rotate drive shaft 9 about axis 7 in response to translation of piston 3 produced by the work fluid exerting axial thrust on piston 3.

Conversely, in the case of an operating machine, mechanism 10 transfers mechanical power from drive shaft 9 to piston 3 to translate piston 3 along axis 7 in response to external torque applied to drive shaft 9.

Mechanism 10 is also preferably designed to rotate piston 3 about axis 7, as it translates along axis 7, in response to axial thrust exerted on piston 3, in the case of a driving machine, or torque applied to drive shaft 9, in the case of an operating machine.

As shown in Figure 1, mechanism 10 comprises a first portion defined by a housing 11 coaxial with axis 7 and connected angularly to, to rotate integrally with, drive shaft 9; and a second portion interposed between piston 3 and housing 11, housed at least partly in housing 11, and connected angularly to, to rotate integrally with, housing 11.

As described in detail and shown in said International Patent Application, the second portion of mechanism 10 is defined by a mechanical transmission 12, which may be variously designed, in terms of geometry and linkage, provided it is suitable for the purpose.

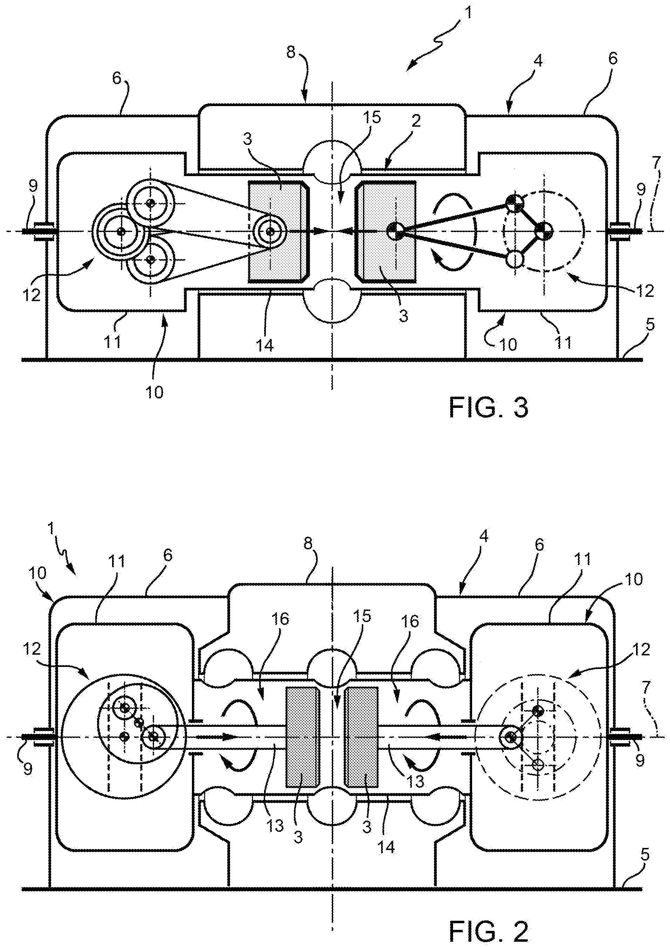

For example, as shown in the Figure 2 schematic of the Figure 1 machine, mechanical transmission 12 comprises a rod 13 coaxial with axis 7, fitted rigidly at one end with piston 3, and mounted through a prismatic guide, integral with housing 11, to reciprocate linearly with piston 3 along axis 7. The opposite end of rod 3 extends inside housing 11 and is connected to an assembly of parts, operation of which is based on the geometry and linkages of straight hypocycloids, and for a detailed description of which the reader is referred to said International Patent Application.

Functionally, mechanical transmission 12 converts the reciprocating movement of piston 3 along axis 7 to rotation of housing 11 about axis 7; and housing 11 in turn rotates drive shaft 9 and the whole of mechanical transmission 12, i.e. the assembly of parts housed inside housing 11, and rod 13 with piston 3. If machine 1 is an operating machine, mechanical transmission 12, as stated, converts rotation of drive shaft 9 to reciprocating movement of rod 13 and piston 3, and to rotation of housing 11 and the parts angularly integral with it, i.e. the assembly of parts and rod 13 with piston 3, about axis 7.

In the Figure 3 variation, mechanical transmission 12 comprises a connecting rod-crank type crank mechanism as described in detail in said International Patent Application, and which is angularly integral with housing 11, and functions in the same way as transmission 12 described with reference to Figure 2.

As will be clear from the following description, automatic work fluid timing device 2 is achievable by virtue of mechanism 10 described above. That is, an automatic timing device 2 of the type described below with reference to machine 1 in Figure 1 or 12 is achieved by virtue of the ability of mechanism 10 to combine along the same axis a reciprocating movement - that of piston 3 - and a rotary movement - that of housing 11 and the parts angularly integral with it.

With reference to the Figure 1 example, the opposed piston 3 of machine 1 in Figure 1 are flat-topped, double-acting pistons; and mechanism 10 connecting each piston 3 to respective drive shaft 9 is housed at a respective axial end of casing 4. More specifically, housings 11 of mechanisms 10 are mounted to rotate about axis 7 inside respective fixed shells 6 of casing 4, and are connected rigidly to each other by a rotary sleeve or sheath 14 coaxial with axis 7 and connected in axially sliding manner to the two pistons 3 reciprocating along axis 7.

Sheath 14 forms part of automatic timing device 2, and has a number of openings or ports, which, as will be seen, define respective work fluid timing slide valves, and are located along and about axis 7, at a centre chamber 15 and two lateral chambers 16 defined inside sheath 14 by the two pistons 3 as they reciprocate.

More specifically, the ports in sheath 14 comprise a first centre ring of preferably elliptical ports 17 equally spaced about axis 7 and facing centre chamber 15; and two second rings of preferably circular ports 18 located on opposite sides of ports 17, equally spaced about axis 7 and facing respective lateral chambers 16. In the example shown, each ring has four ports 17, 18.

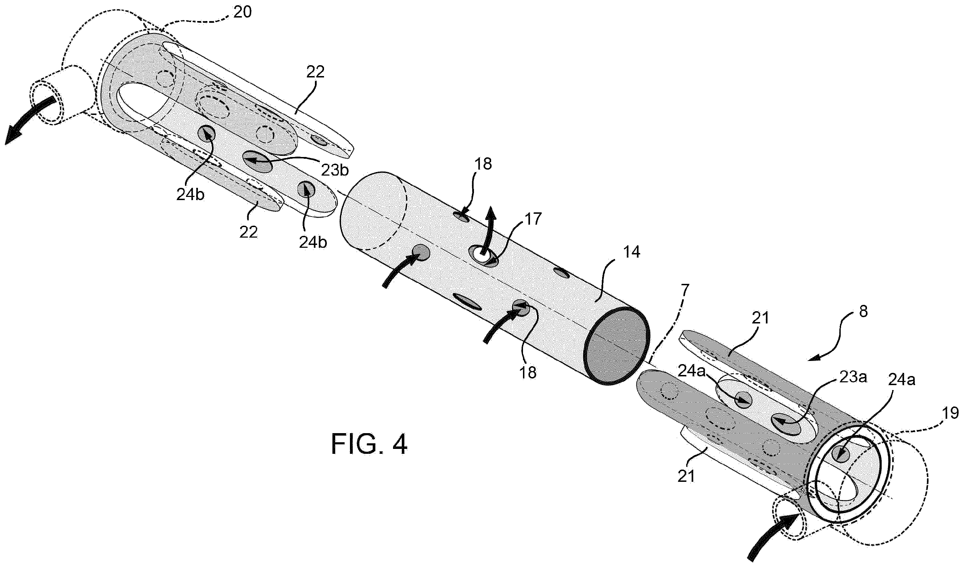

As shown in Figure 1 and more clearly in Figure 4, sheath 14 is inserted inside hollow body 8, which forms part of automatic timing device 2 and comprises two fixed annular end bodies defining an intake manifold 19 and an exhaust manifold 20 respectively; and a number of fixed axial tubular members, which interlace to define an annular body bounded internally by a cylindrical wall 8a connected in rotary manner to sheath 14 and formed by the inner walls of the contiguous individual tubular members.

The tubular members comprise a first set of - in the example shown - four tubular members 21, which are arranged comb-fashion, are closed at one end, and communicate, at the open end, with intake manifold 19; and a second set of - in the example shown - four tubular members 22, which are arranged comb-fashion, are closed at one end, and communicate, at the open end, with exhaust manifold 20.

As shown in Figures 4, 5 and 6, on its lateral wall contacting sheath 14, each tubular member 21, 22 has three openings comprising a preferably elliptical centre opening 23 located, together with the other centre openings 23, in the same plane, perpendicular to axis 7, as ports 17 in sheath 14; and two preferably circular lateral openings 24 located on opposite sides of respective centre opening 23, and each of which lies, together with the corresponding lateral openings 24 of the other tubular members 21, 22, in a respective plane perpendicular to axis 7 and coincident with the plane of a corresponding ring of ports 18 in sheath 14.

In actual use, as pistons 3 rotate and translate and sheath 14 is rotated by mechanism 10, ports 17 and 18 in sheath 14 and centre openings 23 and lateral openings 24 in tubular members 21 and 22 are superimposed periodically to connect centre chamber 15 and lateral chambers 16 cyclically to intake manifold 19 and exhaust manifold 20.

For the sake of clarity, in Figures 4, 5, 6 and 7-11, centre openings 23 and lateral openings 24 in members 21 of intake manifold 19 are indicated 23a and 24a, and centre openings 23 and lateral opening 24 in members 22 of exhaust manifold 20 are indicated 23b and 24b.

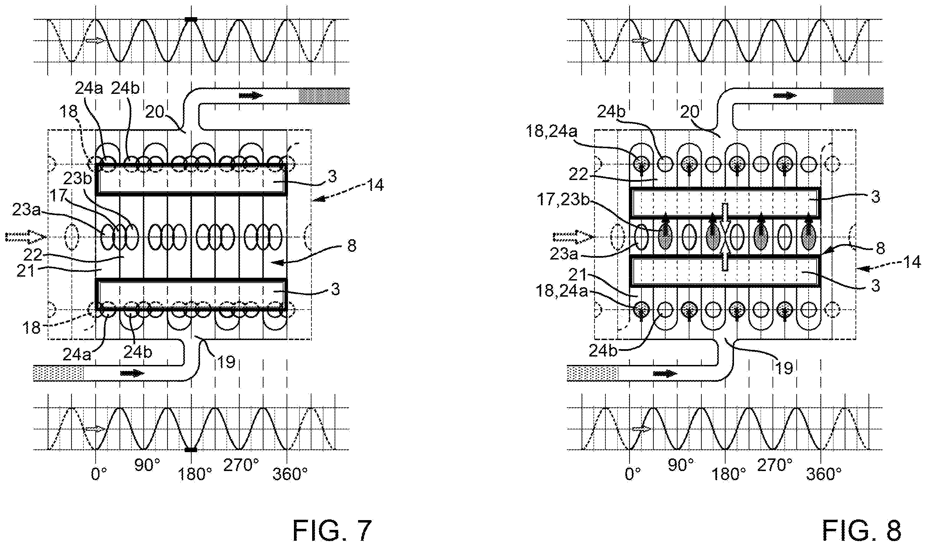

Figures 7 to 11 show schematic spread-out views of pistons 3 and sheath 14 to illustrate the operating sequence of a work cycle of machine 1.

In Figure 7, pistons 3 are shown in the bottom dead-centre position, i.e. the maximum distance apart. In which configuration, ports 17 and 18 in rotary sheath 14 are offset angularly with respect to centre openings 23 and lateral openings 24 respectively of intake and exhaust manifolds 19 and 20.

When pressurized work fluid is fed into lateral chambers 16 through lateral openings 24 of intake manifold 19, pistons 3 move towards each other and their respective top dead-centre positions, and sheath 14 rotates so that (Figure 8) lateral ports 18 are fully aligned with lateral openings 24 in intake tubular members 21, centre ports 17 are fully aligned with centre openings 23 in exhaust tubular members 22, and the exhausted fluid is expelled from centre chamber 15 through tubular members 22 and exhaust manifold 20.

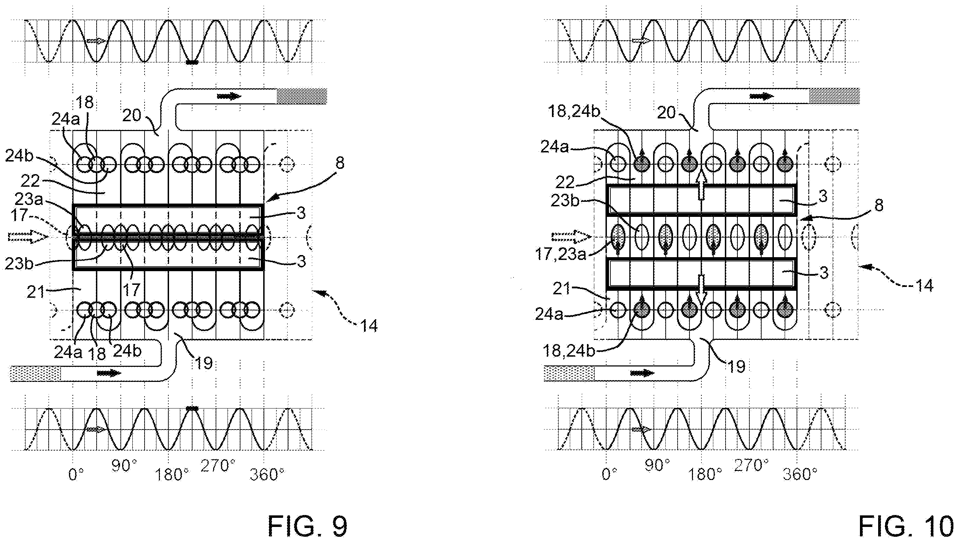

In Figure 9, pistons 3 are shown in their respective top dead-centre positions. In which configuration, ports 17 and 18 in rotary sheath 14 are offset angularly with respect to centre openings 23 and lateral openings 24 respectively of intake and exhaust manifolds 19 and 20.

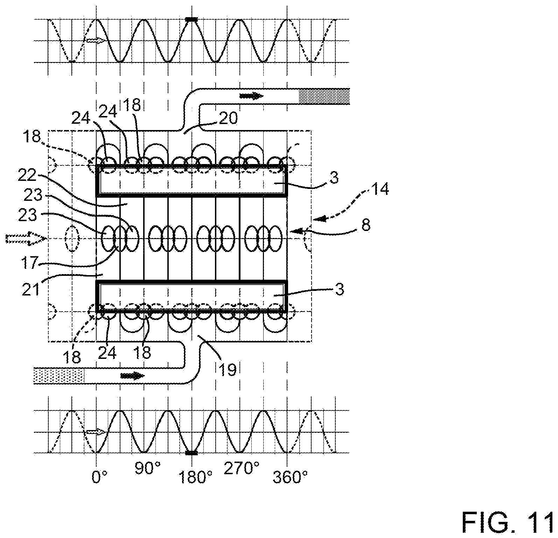

When pressurized work fluid is fed into centre chamber 15 through centre openings 23 of intake manifold 19 and through ports 17 in sheath 14, pistons 3 move away from each other and their respective top dead-centre positions, and, at the same time, sheath 14 rotates (Figure 10) so that centre ports 17 are fully aligned with centre openings 23 in intake tubular members 21, lateral ports 18 are fully aligned with lateral openings 24 in tubular members 22, and the exhausted fluid is expelled from lateral chambers 16 through tubular members 22 and exhaust manifold 20. Figure 11 is the same as Figure 7.

As shown by the sinusoidal-wave graphs in Figures 7-11, showing the axial movement of each piston 3 in relation to rotation of sheath 14, i.e. of drive shaft 9, the complete work cycle is performed in two strokes of pistons 3 (i.e. in one complete oscillation of each piston 3) and for each quarter turn of sheath 14 and drive shaft 9. So machine 1 performs four work cycles for each complete turn of drive shaft 9.

It is important to note that, if, as in the example shown, each chamber (centre chamber 15 or lateral chamber 16) corresponds to four ports in rotary sheath 14 (centre ports 17 and lateral ports 18) and eight openings in hollow body 8 (centre openings 23 and lateral openings 24), the ports in sheath 14 between centre chamber 15 and lateral chambers 16 need only be offset by one eighth of a turn to keep fluid admission and expulsion inverted at all times.

As will be clear from the above description, in the case of machine 1 in Figure 1, automatic timing device 2 is defined by rotary sheath 14, which rotates together with the two housings 11 and comprises ports 17 and 18, and by fixed hollow body 8, which comprises openings 23 and 24 designed to cooperate with ports 17 and 18 to admit and exhaust work fluid.

In this particular case, the action of pistons 3 essential to achieving the automatic timing function consists in their linear reciprocating movement along axis 7, which mechanisms 10 convert to rotation of housings 11 and therefore of sheath 14, whereas rotation of pistons 3 about axis 7 has no effect on opening and closing the ports.

In other words, automatic timing device 2 for a machine with flat-topped pistons and a rotary sheath as shown in Figure 1 would be equally achievable even if mechanical transmission 12 of mechanism 10 were designed to only rotate housing 11 about axis 7 in response to movement of piston 3 along axis 7, without also transmitting this rotation to piston 3.

In the case of machine 1 in Figure 3, it is important to note that pistons 3 are flat-topped, single-acting pistons, in that the connecting rod-crank mechanisms associated with respective pistons 3 prevent the formation of lateral chambers 16. In which case, work fluid is admitted and expelled solely through centre ports 17 in sheath 14 and centre openings 23 in hollow body 8.

Figure 12 shows a variation of machine 1 comprising an automatic timing system 2.

In this case, machine 1 is an internal combustion engine, and automatic timing is achieved, not by a rotary sheath integral with housing 11, but by pistons 3 themselves, which are shaped to cyclically cover and uncover work fluid intake and exhaust ports as they are reciprocated and rotated by mechanical transmission 12 of mechanism 10.

More specifically, as shown in Figures 12, 13 and 15, this embodiment of machine 1 has no sheath 14, and hollow body 8 is in the form of a cylindrical body bounded externally by a cylindrical wall 25, and internally by a fixed cylindrical sleeve 26 coaxial with axis 7 and fitted in rotary and axially-sliding manner to pistons 3, which reciprocate along and rotate about axis 7. Through openings (shown by dash lines in Figure 12) are formed in sleeve 26, and comprise work fluid (e.g. air or air-fuel mixture) intake ports 27 and exhaust gas exhaust ports 28. Intake ports 27 and exhaust ports 28 are shaped, as explained in more detail below, to open and close as pistons 3 rotate, and communicate with respective intake and exhaust conduits housed inside hollow body 8, together with the necessary electric connections and various service fluid, e.g. coolant and lubricant, pipes (not shown).

Sleeve 26, with intake ports 27 and exhaust ports 28, forms part of automatic timing device 2, which also comprises the two rotary pistons 3, which, in this case, have skirts designed so that the solid parts and voids cyclically cover and uncover ports 27 and 28 in sleeve 26 as pistons 3 rotate.

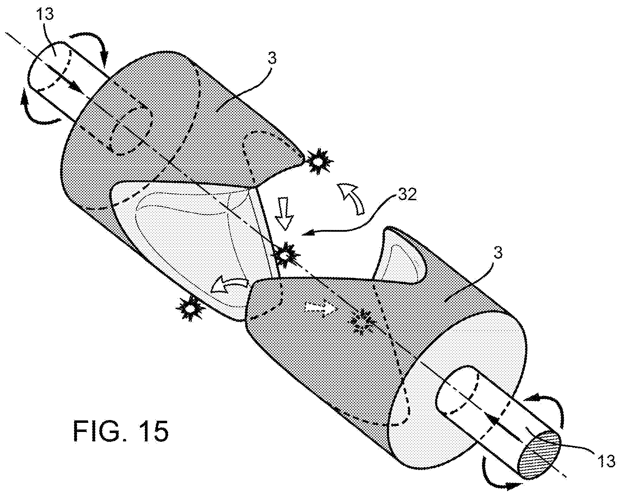

More specifically, as shown in Figure 15, the skirt of each piston 3 is 'saddle-shaped', i.e. two-waved, with two diametrically opposite ridges alternating with two intermediate cavities, i.e. with respective solids and voids alternating every quarter turn. The two pistons 3 are offset angularly by a quarter turn, so that the ridges of one piston 3 face the cavities of the other. The ridges of each piston 3 are bevelled so that, when pistons 3 are joined in their respective top dead-centre positions, a gap 29 is formed between each ridge of each piston 3 and the corresponding cavity of the other, and defines, in the top dead-centre position, a respective access to the centre combustion chamber 32. Pistons 3 therefore define four accesses to centre combustion chamber 32, which are offset evenly by a quarter turn, and which, as pistons 3 rotate, align cyclically with openings 30 in sleeve 26 to permit injection or ignition of compressed work fluid inside centre combustion chamber 32 by means of known devices not shown.

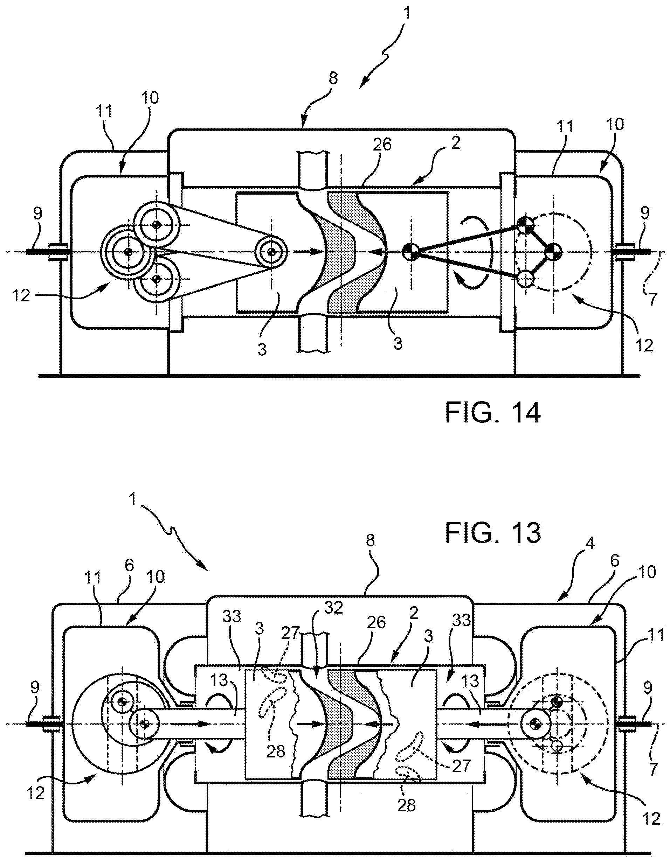

Figures 12 and 13 show an example of machine 1 with double-acting 'saddle' pistons 3.

The two pistons 3 are angularly integral with respective housings 11, which, to allow synchronous rotation of pistons 3, are connected angularly to each other, via respective gears 9a, by an external transmission 31 shown schematically by a dash line in Figure 12, and which also serves to transmit power to the user (e.g. a gearshift or, at any rate, a power take-off) or to interconnect similar drive units.

Pistons 3 define, inside and with sleeve 26, a variable-volume centre chamber 32 and two variable-volume lateral chambers 33. Fluid timing into the two lateral chambers 33 at the ends of sleeve 26 is advantageously achieved by fitting rotary-disk valves 34 inside the ends of the sleeve to alternately open and close the intake and delivery conduits of respective manifolds 35. In the case of a supercharged four-stroke engine, the same cylinder may thus contain the combustion area, in centre chamber 32 between the two saddle pistons 3, and two positive-displacement compressors in lateral chambers 33. The volume flow rate of the compressors is almost twice that of the engine, because air is drawn in every two, as opposed to every four, piston strokes; and, once every two piston strokes, compression is performed by expansion of the gases in the centre chamber directly by the piston body, as opposed to intermediate mechanisms, with smaller organic losses.

As described in detail below with reference to a work cycle operating sequence, machine 1 in Figure 12 is designed to perform an actual four-stroke engine valve operating sequence. For which purpose, sleeve 26 may comprise, for each piston 3 and in appropriate positions close to the top dead-centre position, as many as two diametrically opposite intake ports 27, and two diametrically opposite exhaust ports 28. Ports 27 and 28 are appropriately curved, and are so arranged that each two ports 27 or 28 are closed by the ridges of pistons 3 for a quarter turn of pistons 3, and are opened at the cavities in the saddle-shaped skirt at the next quarter turn.

In other words, ports 27 and 28 open every half turn of pistons 3, i.e. twice for each turn of pistons 3, i.e. of housings 11 rotating them.

By configuring mechanical transmission 12 of mechanism 10 so that housing 11 makes one turn for every four oscillations of piston 3, ports 27 and 28 will open twice for every four oscillations of pistons 3, thus achieving a four-stroke engine operating sequence.

In this connection, it is important to note that, by altering the number and arrangement of the ports in sleeve 26, the skirt shape of pistons 3, and the transmission parameters of mechanism 10, automatic timing using slide valves can also be achieved for machines operating with thermodynamic cycles other than the four-stroke one described above, e.g. a two-stroke cycle.

In fact, assuming mechanical transmission 12 is the same as in the above example, and, for each piston 3, four, instead of two, intake ports 27 equally spaced about axis 7, and four, instead of two, exhaust ports 28, also equally spaced about axis 7, are positioned facing centre chamber 32, then the two opposite cavities of each piston 3 will open two diametrically opposite ports in each group of four ports at each quarter turn. That is, each valve opens for each quarter turn of piston 3, i.e. for every two oscillations of piston 3, thus achieving the two-stroke operating sequence typical of pumps, hydraulic motors, compressors, and gas or steam expanders.

Figure 12 shows machine 1 at the gas exhaust stage, in which pistons 3 are moving towards each other and their respective top dead-centre positions. In this configuration, intake ports 27 are closed, and exhaust ports 28 are still partly open but almost closed.

Figure 12 also shows schematically, by arrows, circulation of the work fluid. Arrow 36 indicates flow of the cooling fluid, water or air, of machine 1; and arrow 37 flow of the cooling fluid, water or air, of the intercooler.

As regards circulation of the work fluid, lateral chambers 33 draw in external air (arrow 38) from manifolds 35 through disk valves 34, and feed compressed air (arrow 39) to an intercooler 40 formed in sleeve 8. From here, the cooled compressed air flows through intake ports 27 (two diametrically opposite for each piston 3) into, and is compressed further inside, centre chamber 32, onto which face openings 30 where the injectors or spark plugs (not shown) and anything else required to activate combustion are located.

The exhaust gases expelled through exhaust ports 28 (two diametrically opposite for each piston 3) are ultimately fed to an exhaust manifold (not shown) through an opening 41 formed in outer wall 25 of sleeve 8.

As shown in Figure 13, mechanism 10 for transferring power between drive shaft 9 and saddle pistons 3 of machine 1 in Figure 12 has a mechanical transmission 12 of the type described above with reference to Figure 2.

Figure 14 shows a variation, in which mechanism 10 connected to saddle pistons 3 comprises a mechanical transmission 12, with a connecting rod-crank mechanism, of the type described above with reference to Figure 3. In this case, pistons 3 are single-acting types.

With reference to machine 1 in Figures 12, 13 and 14, it is important to note the advantages afforded by the use of saddle pistons 3. Firstly, by eliminating the bulk of the poppet valves, the volume of centre chamber 32 can be reduced as required to bring the top dead-centre positions of saddle pistons 3 closer together, thus enabling the compression ratio of machine 1 and, to a certain extent, the form of centre combustion chamber 32 to be established as required.

Secondly, as shown also by the operating sequence described below, at the combustion stage, intake ports 27 and exhaust ports 28 of centre chamber 32 are all covered by the ridges and protected by the sealing rings of pistons 3, and so shielded from the 'flame' produced at the expansion stage.

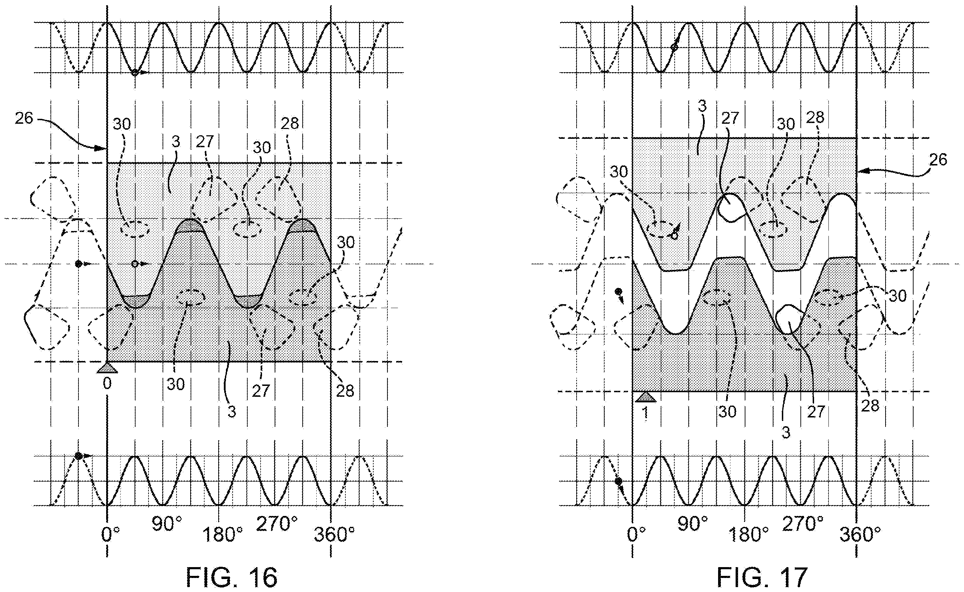

Figures 16 to 24 show spread-out schematics of pistons 3 and sleeve 26, illustrating the operating sequence of a work cycle of machine 1 in Figure 12. For each piston 3, each schematic shows a sinusoidal graph illustrating the rotation-translation pattern of piston 3.

Figure 16 shows an operating configuration prior to the intake stroke, and in which pistons 3 are joined in their respective top dead-centre positions. In this configuration, intake ports 27 and exhaust ports 28 are all covered by the ridges of pistons 3, and gaps 29 are offset angularly with respect to openings 30.

For the sake of clarity, only one intake port 27 and one exhaust port 28 for each piston 3 are shown in the Figure 16-24 schematics.

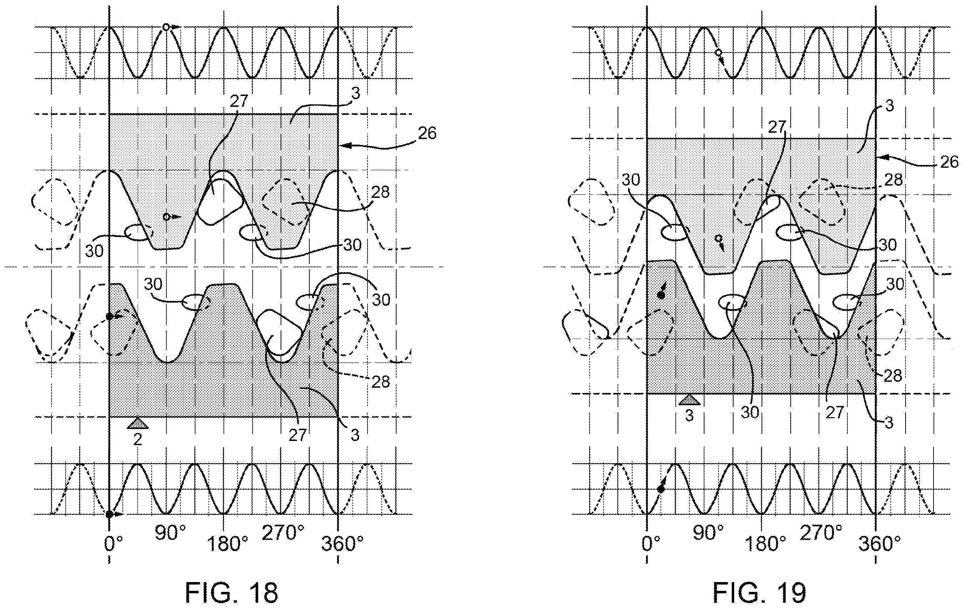

As pistons 3 withdraw from each other and, at the same time, rotate about axis 7, intake ports 27 being opening (Figure 17), and are fully open by the time the pistons reach their respective bottom dead-centre positions (Figure 18). In this position, in addition to intake ports 27, openings 30 are also positioned, albeit only partly, facing centre chamber 32.

From this point on, rotation-translation of pistons 3 (Figure 19) brings them closer together again, thus gradually compressing the work fluid intake, gradually closing intake ports 27, and uncovering openings 30 even further.

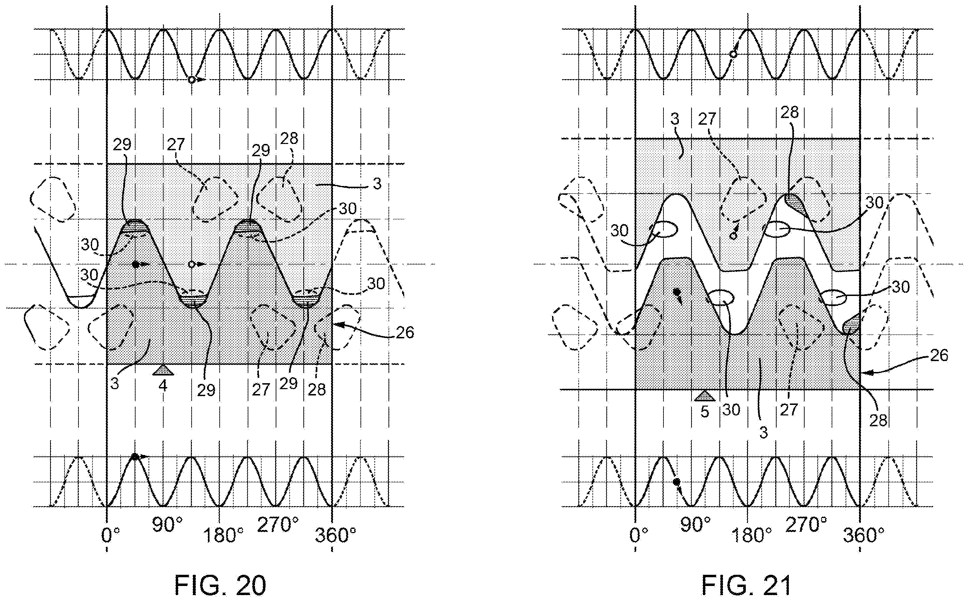

As shown in Figure 20, the compression stage is completed when pistons 3 complete their closing strokes and reach their respective top dead-centre positions. In this configuration, which is reached a quarter turn of pistons 3 after the start of the cycle, the angular position of pistons 3 with respect to fixed sleeve 26 is such that intake ports 27 and exhaust ports 28 are all closed, and openings 30 are located at gaps 29 allowing access to centre combustion chamber 32.

Following combustion of the work fluid, pistons 3 withdraw from each other (Figure 21) and, by rotating, gradually uncover exhaust ports 28, from which the exhaust gases can begin flowing out of centre chamber 32.

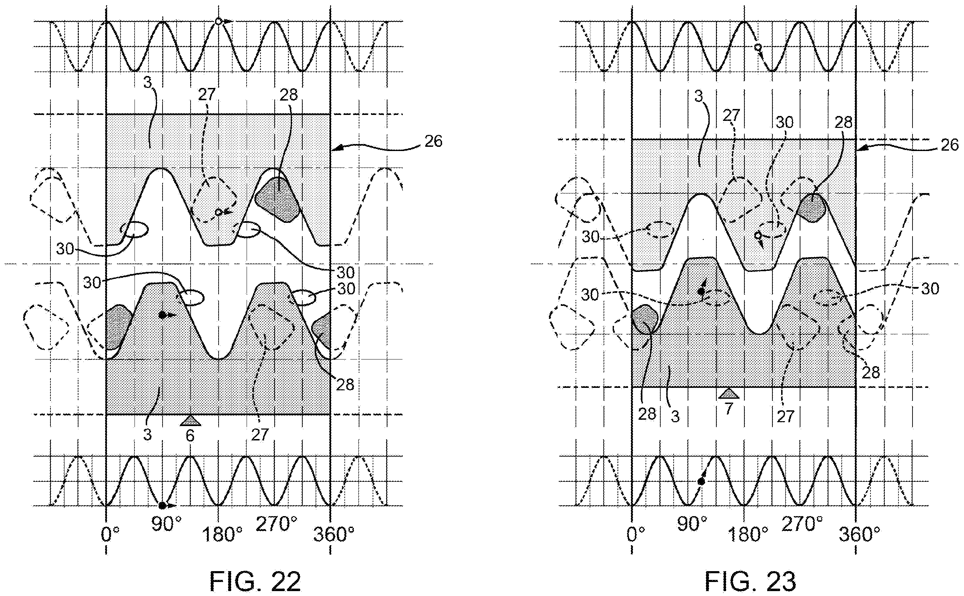

The expansion stage ends when the pistons reach their respective bottom dead-centre positions and exhaust ports 28 are fully open (Figure 22).

Subsequent rotation-translation of pistons 3 brings them closer together and gradually closes exhaust ports 28 (Figure 23).

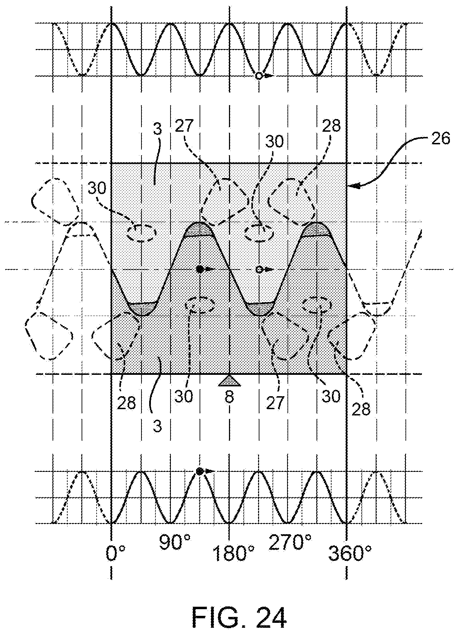

As shown in Figure 24, by the time the pistons reach their respective top dead-centre positions (Figure 24), exhaust ports 28 are fully closed, as are intake ports 27, unless a crossover, which is always possible, is desired, and gaps 29 allowing access to centre chamber 32 are offset angularly with respect to openings 30.

As shown by the sinusoidal curves illustrating the operating pattern of pistons 3, the work cycle is completed in half a turn, i.e. in one 180° rotation, of piston 3 about axis 7.

In connection with the above, a number of observations can be made. Firstly, as stated, automatic timing device 2 is made possible by mechanism 10 combining along one axis a reciprocating movement - that of pistons 3 - and a rotational movement - that of housing 11 and the parts angularly integral with it.

In the Figure 1 machine, automatic timing is achieved by the synergic action of piston 3 reciprocating along axis 7, and of sheath 14 which, being angularly integral with housing 11, rotates with it about axis 7 to cyclically superimpose its ports on the fixed openings in the intake and exhaust manifolds.

In the Figure 12 machine, on the other hand, automatic timing is achieved by saddle piston 3 reciprocating along axis 7 and - being connected angularly integral with housing 11 by mechanical transmission 12 - rotating about axis 7 to cyclically superimpose the ridges and cavities in its skirt on the fixed intake and exhaust ports in sleeve 26.

Secondly, the ability of machine 1, with a rotary sheath or saddle pistons, to transmit or receive power to or from the outside via the two coaxial drive shafts 9 projecting from end shells 6 imparts a certain degree of modularity to machine 1, i.e. enables two or more machines 1 to be connected mechanically in series or parallel by means of straightforward, preferably parallel-axis gear trains. More specifically, if a machine 1 with saddle pistons is connected to a machine 1 with a rotary sheath, the latter machine 1 effectively substitutes for external transmission 31 in timing the movement of saddle pistons 3.

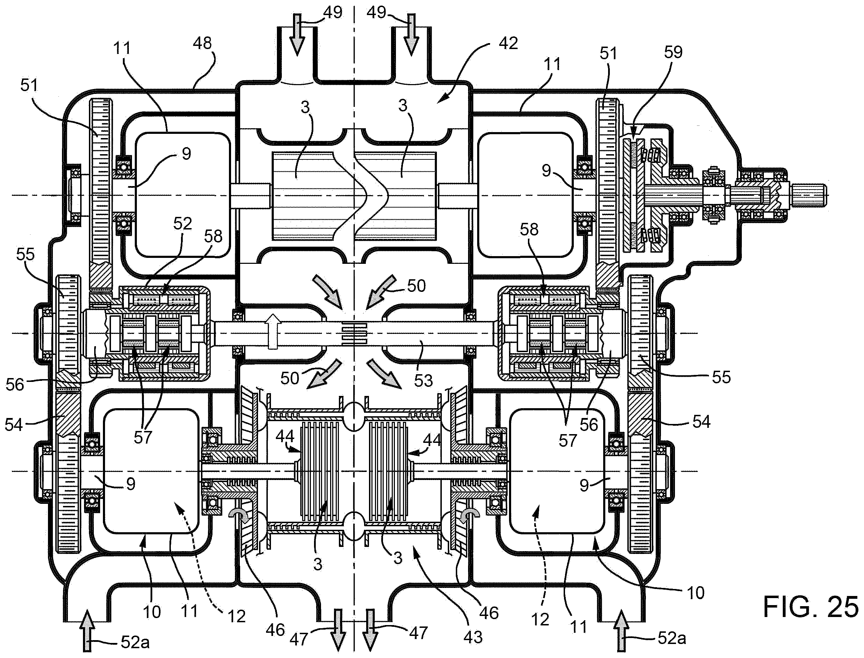

One particularly advantageous example of how this modular design can be applied is shown in Figure 25, in which a machine identical to the rotary-sheath machine 1 in Figure 1 - except for a few technical provisions referred to below - is connected to an internal combustion engine 42 to operate as an exhaust gas expander 43, to convert at least some of the energy in the exhaust gas to useful mechanical work, as opposed to dissipating it in silencers and/or end pipes.

In the example shown, internal combustion engine 42 is defined by a supercharged machine 1 with saddle pistons 3 as shown n Figure 12, but any other internal combustion engine may be connected to expander 43.

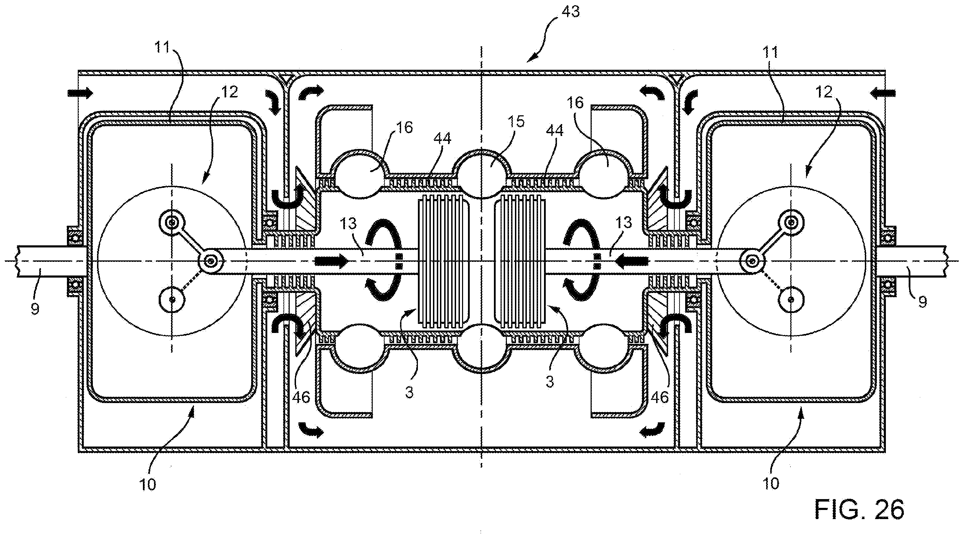

As shown in Figures 25 and 26, expander 43 differs from the rotary-sheath machine 1 in Figure 1 by the normal lubricated sliding seals in hollow body 8 - which is exposed, in use, to the hot exhaust gas - being replaced with labyrinth seals 44, with no contact between the moving parts. To shield mechanical transmissions 12 inside end shells 6 from the heat from hollow body 8, housings 11 are detached from hollow body 8 and sheath 14, and are cooled by a stream 52 of outside air produced by rotation of respective centrifugal-blade devices 46 fitted to respective end disks of sheath 14.

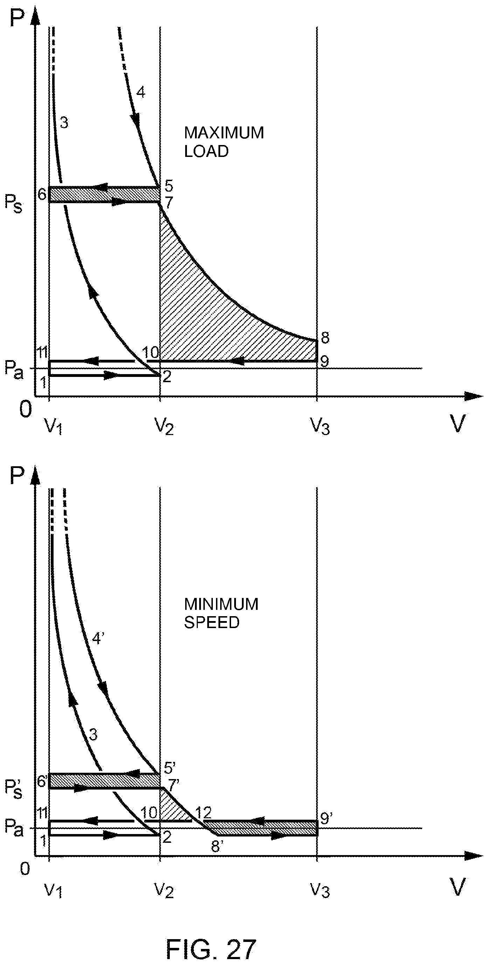

Figure 27 shows P-V graphs of the thermodynamic cycle achievable by the engine+expander assembly in both maximum load and minimum engine speed conditions. For the sake of simplicity, the P-V graphs in Figure 27 refer to an ordinary non-supercharged engine 42.

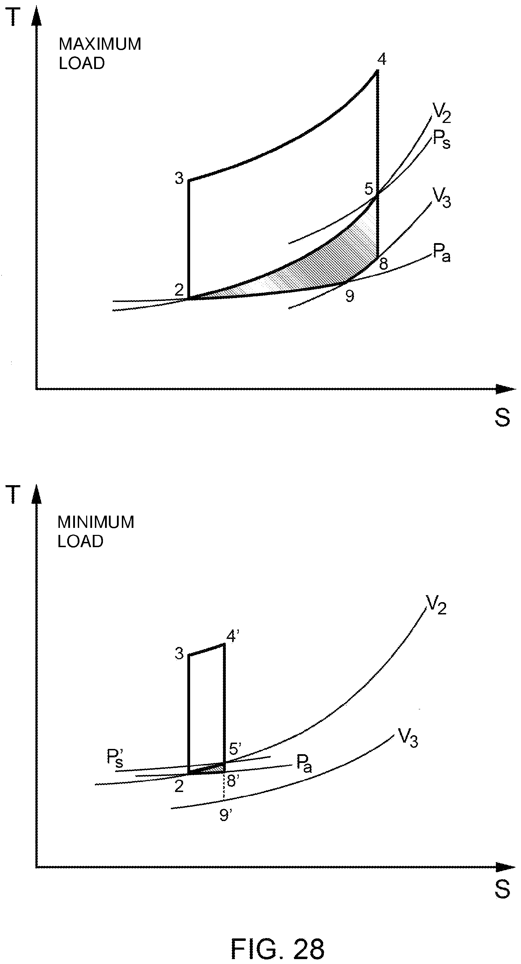

Figure 28 shows entropic T-S graphs corresponding to the same operating conditions as the Figure 27 graphs.

In the simplified P-V graphs in Figure 27, V2-V1 indicate engine displacement; V3-V1 the equivalent displacement of an appropriate expander speed; Pa atmospheric pressure; and Ps (or Ps') the engine exhaust gas pressure. The transformations 1-2-3-4-5-6 in the engine, and further transformations 6-7-8-9-10-11 in the expander may be schematized as follows : outside air is drawn in (stage 1-2) and compressed in the engine (stage 2-3) where, following combustion, the gases expand (stage 4-5) before being expelled at pressure Ps from the engine (stage 5-6), by which they are pumped into the expander (stage 6-7); from here, they can expand further in the expander cylinder (stage 7-8) before being exhausted into the atmosphere at the end of the cycle (stage 8-9-10-11).

As shown in the Figure 27 graphs, in which the areas whose outlines are travelled clockwise represent useful work, and those whose outlines are travelled anticlockwise represent energy loss, to the useful work of the engine alone - represented by area 2.3.4.5.2 minus the pumping area 1.2.10.11.1 - is added, if the load is high enough, the extra work represented by area 10.7.8.9.10 minus pumping area 5.6.7.5. This extra work obviously increases alongside an increase in pressure Ps and a reduction in losses caused by pumping the gases from the engine to the expander along 5-6-7, e.g. losses caused by the interposition of a catalyser body.

Connecting the expander to the engine is therefore of no advantage when the engine load, i.e. pressure Ps', is too low, as, for example, in a minimum speed cycle 1-2-3-4'-5'-6'-7'-8'-9'-12-10-11-1. In which case, the little extra work 10.7'.12.10 obtainable in the expander would actually be less than pumping losses 5'.6'.7'.5' plus 12.8'.9'.12, without counting friction losses, and the expander would increase total resistance, and act as a brake as opposed to providing useful work.

The same also applies to the simplified cycles in the Figure 28 T-S graphs, in which, minus pumping losses, the increase 2.5.8.9.2 in the useful work area is considerable at maximum load, whereas the positive area 2.5'.8'.2 is totally insufficient at minimum speed.

This drawback is solved by the modular design enabling disconnection of the expander from the engine by clutches varying according to the thermal load and speed of expander 43.

Figure 25 shows a drive unit comprising internal combustion engine 42 and expander 43 enclosed inside a casing 48.

Engine 42 is designed to draw in outside air 49 and feed the exhaust gases 50 to the expander, which in turn exhausts the gases to the outside (arrow 47) and draws in outside air 52a to cool its mechanical transmissions 12. Each drive shaft 9 of engine 42 is fitted with a drive gear 51, which meshes with a toothed drum 52 fitted to a respective end of a shaft 53 for connecting the two drive shafts 9 of engine 42 angularly integral with each other and so synchronizing the movement of saddle pistons 3.

Each drive shaft 9 of expander 43 is fitted with a respective gear 54, which meshes with a gear 55 fitted to a sleeve 56 coaxial with shaft 53.

Sleeve 56 extends inside toothed drum 52 and can be fitted to the latter externally by a free-wheel clutch 58 and/or internally by a centrifugal clutch 57. It is important to note that the type of clutch means described and shown in Figure 25 is purely indicative, and may be replaced with any other type of clutch capable of performing the same function, or even by electronically controlled electromechanical or hydraulic devices.

In actual use, if the thermal load of the exhaust gases is high enough, gears 54 tend to rotate sleeves 56 faster than toothed drums 52, so free-wheel clutches 58 connect them angularly integral with one another, and the extra useful work supplied by expander 43 is transmitted to drive gears 51 and to an external user by friction clutches 59.

Conversely, if the thermal load of the exhaust gases is too low, free-wheel clutches 58 do not connect engine 42 mechanically to expander 43, which, being disconnected from the engine, simply acts as a fume dissipater-silencer, rotated more slowly by weak friction, particularly at minimum engine speed.

In the event of a low thermal load and engine 42 being run externally at too high a speed, centrifugal clutches 57 connect shaft 53 to sleeves 56 to rotate expander 43 via gears 55 and 54, so expander 43 acts as an engine brake. In the event of a high thermal load and high speed of engine 42 occurring simultaneously, e.g. at maximum power, both free-wheel clutches 58 and centrifugal clutches 57 connect together and more strongly.

A drive unit of the type shown by way of example in Figure 25 thus provides for both increasing the expansion ratio with respect to the compression ratio, and varying piston displacement by deactivating expander 43.

The advantages of a machine 1 in accordance with the present invention will be clear from the above description. However, it is important to note a few particularly advantageous features of both the rotary-sheath and saddle piston variations of machine 1.

Firstly, as stated, assigning the slide valve timing function to power transmission mechanism 10 makes it possible to eliminate the specific timing components required in known poppet valve machines, so machine 1 is mechanically simpler, has fewer moving parts and is therefore cheaper to produce, is more reliable and silent-operating, and is organically more efficient than complex currently used mechanisms.

Secondly, using two opposed mechanisms 10, machine 1 is intrinsically symmetrical and therefore perfectly balanced structurally, almost in the same way as a straightforward gear train, with no parasitic vibration, and, unlike most machines, requires no additional specific balancing devices, such as counter-rotating cams.

Finally, the structure of automatic timing device 2 of machine 1 enables adjustable valve timing using straightforward stator gate valve devices fitted to the outside of the fixed cylinder to adjust the size of the cylinder ports, as opposed to more complex, high-cost systems operating on moving parts, and as currently used to adjust poppet valve openings.

## Claims

1. A reciprocating positive-displacement machine comprising an input/output shaft (9); a fixed cylinder (8a; 26) having an axis (7); at least one piston (3) reciprocating inside the cylinder (8a; 26); and a transmission mechanism (10) interposed between the shaft (9) and the piston (3) to transfer mechanical power from one to the other; the cylinder (8a; 26) has intake ports (23a, 24a; 27) and exhaust ports (23b, 24b; 28) for a work fluid, and the transmission mechanism (10) has a rotary portion (11) coaxial with the axis (7) and connected angularly to the shaft (9) to rotate integrally with it about the axis (7); the transmission mechanism (10) is designed to rotate said rotary portion (11) about the axis (7) and simultaneously reciprocate the piston (3) along the axis (7) in response to axial thrust exerted on the piston (3) or torque applied to the shaft (9); the machine (1) comprises a work fluid automatic timing device (2) comprising a timing member (14; 3), which is located inside the cylinder (8a; 26) coaxial with the axis (7), is connected angularly to said rotary portion (11) to rotate integrally with it about the axis (7), and is connected in rotary manner to the cylinder (8a; 26) to cyclically open and close the intake ports (23a, 24a; 27) and exhaust ports (23b, 24b; 28) as it rotates;
the machine (1) further comprises two opposed pistons (3) reciprocating along the axis (7) inside the cylinder (8a; 26); and a said transmission mechanism (10) for each piston (3); the rotary portions (11) of the two transmission mechanisms (10) being located at respective axial ends of the cylinder (8a; 26), and being connected angularly to each other to rotate synchronously;
wherein the pistons (3) define a variable-volume centre chamber (15; 32); the intake ports (23a; 27) and exhaust ports (23b; 28) being formed, in alternating positions, in an annular portion of the cylinder (8a; 26) facing the centre chamber (15; 32);
wherein the pistons (3) are flat-topped, and the timing member is defined by a cylindrical sheath (14) interposed between the pistons (3) and the cylinder (8a) and connected integrally to the two rotary portions (11) ;
the machine (1) is **characterized in that** said intake ports (23a) and said exhaust ports (23b) are equally spaced about the axis (7), along said annular portion; the sheath (14) having first openings (17) equally spaced about the axis (7) and formed in an annular portion of the sheath (14) facing the annular portion of the cylinder (8a) in which the intake ports (23a) and exhaust ports (23b) are formed, so that, as the sheath (14) rotates, each first opening (17) is superimposed alternately on the intake ports (23a) and exhaust ports (23b) .

2. A machine as claimed in Claim 1, and comprising an intake manifold (19) and exhaust manifold (20) located at respective axial ends of the cylinder (8a); the intake manifold (19) comprising a number of first axial tubular members (21) arranged comb-fashion, and the exhaust manifold (20) comprising a number of second axial tubular members (22) arranged comb-fashion and which interlace with the first axial tubular members (21) to define, as a whole, a cylindrical body bounded internally by a cylindrical wall (8a), which is defined by the individual inner walls of the first and second axial tubular members and defines said cylinder; the inner walls of the first axial tubular members (21) having intake openings (23a) defining said intake ports, and the inner walls of the second axial tubular members (22) having exhaust openings (23b) defining said exhaust ports.

3. A machine as claimed in Claim 2, wherein the pistons (3) are double-acting and define, in said cylinder (8a), respective variable-volume lateral chambers (16); the cylinder (8a) having further intake (24a) and exhaust (24b) ports formed in alternate positions in respective annular portions of the cylinder (8a), each facing a respective lateral chamber (16); the sheath (14) having two groups of second openings (18); the second openings (18) in each group being equally spaced about the axis (7), and being formed in a respective annular portion of the sheath (14) facing a respective annular portion of the cylinder (8a) in which the further intake (23a, 24a) and exhaust (23b, 24b) ports are formed, so that, as the sheath (14) rotates, each second opening is superimposed alternately on the intake ports (23a, 24a) and exhaust ports (23b, 24b); the second openings (18) in each group being aligned axially with the second openings (18) in the other group, and offset angularly with respect to the first openings (17).

4. A machine as claimed in Claim 3, wherein the inner walls of the first axial tubular members (21) have two further intake openings (24a) located on opposite sides of the relative said intake opening (23a) and defining said further intake ports; and the inner walls of the second axial tubular members (22) have two further exhaust openings (24b) located on opposite sides of the relative said exhaust opening (23b) and defining said further exhaust ports.

5. A reciprocating positive-displacement machine comprising an input/output shaft (9); a fixed cylinder (8a; 26) having an axis (7); at least one piston (3) reciprocating inside the cylinder (8a; 26); and a transmission mechanism (10) interposed between the shaft (9) and the piston (3) to transfer mechanical power from one to the other; the cylinder (8a; 26) has intake ports (23a, 24a; 27) and exhaust ports (23b, 24b; 28) for a work fluid, and the transmission mechanism (10) has a rotary portion (11) coaxial with the axis (7) and connected angularly to the shaft (9) to rotate integrally with it about the axis (7); the transmission mechanism (10) is designed to rotate said rotary portion (11) about the axis (7) and simultaneously reciprocate the piston (3) along the axis (7) in response to axial thrust exerted on the piston (3) or torque applied to the shaft (9); the machine (1) comprises a work fluid automatic timing device (2) comprising a timing member (14; 3), which is located inside the cylinder (8a; 26) coaxially with the axis (7), is connected angularly to said rotary portion (11) to rotate integrally with it about the axis (7), and is connected in rotary manner to the cylinder (8a; 26) to cyclically open and close the intake ports (23a, 24a; 27) and exhaust ports (23b, 24b; 28) as it rotates;
the machine (1) further comprises two opposed pistons (3) reciprocating along the axis (7) inside the cylinder (8a; 26); and a said transmission mechanism (10) for each piston (3); the rotary portions (11) of the two transmission mechanisms (10) being located at respective axial ends of the cylinder (8a; 26), and being connected angularly to each other to rotate synchronously;
wherein the pistons (3) define a variable-volume centre chamber (15; 32); the intake ports (23a; 27) and exhaust ports (23b; 28) being formed, in alternating positions, in an annular portion of the cylinder (8a; 26) facing the centre chamber (15; 32);
the machine (1) is **characterized in that** the transmission mechanisms (10) are designed to reciprocate the pistons (3) along the axis (7) and also rotate the pistons (3) about the axis (7), in response to axial thrust exerted on the pistons (3) or torque applied to the shaft (9); the timing member being defined by the two pistons (3), each of which is angularly integral with the rotary portion (11) of the respective transmission mechanism (10), and, at its free end, is saddle-shaped with two diametrically opposite ridges alternating with two intermediate cavities, so that, as the pistons (3) rotate, the ridges and cavities cyclically cover and uncover the intake ports (27) and exhaust ports (28); and the pistons (3) being offset angularly, so that the ridges of each piston (3) face the cavities of the other piston (3).

6. A machine as claimed in Claim 5, wherein, close to the top dead-centre position of the pistons (3), the cylinder (26) has four injection/ignition openings (30) equally spaced about the axis (7); the ridges of each piston (3) are bevelled so that, when the pistons (3) are joined in their respective top dead-centre positions, a gap (29) is formed between the ridge of each piston (3) and the corresponding cavity of the other; said gaps (29), as the pistons (3) rotate, being designed to align cyclically with said injection/ignition openings (30) to define respective accesses enabling injection or ignition of the work fluid, previously fed into and compressed inside the centre chamber (32), by external devices.

7. A machine as claimed in Claim 5 or 6, wherein the pistons (3) define, with the cylinder (8a; 26), respective variable-volume lateral chambers (33); the machine (1) also comprises, for each piston (3), an intake manifold (25) for feeding the work fluid through the intake ports (27) to the centre chamber (32); and the machine (1) also comprising, for each lateral chamber (33), a disk valve (34) which connects a respective intake manifold (25) to the respective lateral chamber (33), and alternately opens and closes intake and delivery conduits of the respective manifold (25), so as to operate the manifold (25) as a work fluid intake positive-displacement compressor.

8. A machine as claimed in any one of the foregoing Claims, wherein, in addition to the rotary portion (11), the transmission mechanism (10) also comprises a mechanical transmission (12) interposed between the piston (3) and the rotary portion (11) and connected angularly to the rotary portion (11) to rotate with it about the axis (7); the rotary portion (11) comprising a box body mounted to rotate about the axis (7); and the mechanical transmission (12) being at least partly housed in the box body.

9. A drive unit comprising an internal combustion engine (42), and an exhaust gas expander (43) comprising a reciprocating positive-displacement machine as claimed in Claims 1 to 4.

## Patentansprüche

1. Sich hin und her bewegende Maschine mit positiver Verschiebung, die eine Eingabe-/Ausgabewelle (9), einen festen Zylinder (8a; 26), der eine Achse (7) hat, zumindest einen Kolben (3), der sich in dem Zylinder (8a; 26) hin- und herbewegt, und einen Getriebemechanismus (10), der zwischen der Welle (9) und dem Kolben (3) zwischengefügt ist, um mechanische Leistung von einem zu dem anderen zu übertragen, aufweist, wobei der Zylinder (8a; 26) Einlassanschlüsse (23a, 24a; 27) und Auslassanschlüsse (23b, 24b; 28) für ein Arbeitsfluid hat, und der Getriebemechanismus (10) einen Rotationsabschnitt (11) hat, der koaxial mit der Achse (7) ist und mit der Welle (9) winklig verbunden ist, um mit ihr um die Achse (7) einstückig zu rotieren, wobei der Getriebemechanismus (10) gestaltet ist, um den Rotationsabschnitt (11) um die Achse (7) zu rotieren und den Kolben (3) als Ansprechen auf einen axialen Schub, der an dem Kolben (3) ausgeführt wird, oder ein Drehmoment, das auf die Welle (9) angewendet wird, entlang der Achse (7) gleichzeitig hin- und her zu bewegen, wobei die Maschine (1) eine automatische Timingeinrichtung (2) für ein Arbeitsfluid aufweist, die ein Timingelement (14; 3) aufweist, das in dem Zylinder (8a; 26) koaxial mit der Achse (7) lokalisiert ist, zu dem Rotationsabschnitt (11) winklig verbunden ist, um mit ihm um die Achse (7) einstückig zu rotieren, und das in einer rotierenden Weise mit dem Zylinder (8a; 26) verbunden ist, um die Einlassanschlüsse (23a, 24a; 27) und die Auslassanschlüsse (23b, 24b; 28) zyklisch zu öffnen und diese zu schließen, wenn es rotiert,
wobei die Maschine (1) außerdem zwei entgegengesetzte Kolben (3), die sich entlang der Achse (7) in dem Zylinder (8a; 26) hin- und herbewegen, und einen Getriebemechanismus (10) für jeden Kolben (3) aufweist, wobei die rotierenden Abschnitte (11) der zwei Getriebemechanismen (10) an jeweiligen axialen Enden des Zylinders (8a; 26) lokalisiert sind, und miteinander winklig verbunden sind, um synchron zu rotieren,
wobei die Kolben (3) eine Zentrumskammer (15; 32) mit variablem Volumen definieren, die Einlassanschlüsse (23a; 27) und Auslassanschlüsse (23b; 28) in abwechselnden Positionen in einem ringförmigen Abschnitt des Zylinders (8a; 26), der in Richtung der Zentrumskammer (15; 32) weist, gebildet sind,
wobei die Kolben (3) oberseitig flach sind und das Timingelement durch eine zylindrische Hülle (14), die zwischen den Kolben (3) und dem Zylinder (8a) zwischengefügt ist und mit den zwei rotierenden Abschnitten (11) einstückig verbunden ist, definiert ist,
wobei die Maschine (1) **dadurch gekennzeichnet ist, dass** die Einlassanschlüsse (23a) und die Auslassanschlüsse (23b) um die Achse (7) entlang des ringförmigen Abschnitts gleichmäßig beabstandet sind, die Hülle (14) erste Öffnungen (17), die um die Achse (7) gleichmäßig beabstandet sind, hat und die in einem ringförmigen Abschnitt der Hülle (14), der zu dem ringförmigen Abschnitt des Zylinders (8a) weist, bei dem die Einlassanschlüsse (23a) und die Auslassanschlüsse (23b) gebildet sind, gebildet sind, so dass, wenn die Hülle (14) rotiert, jede erste Öffnung (17) an den Einlassanschlüssen (23a) und Auslassanschlüssen (23b) abwechselnd überlagert ist.

2. Maschine nach Anspruch 1, und die ein Einlassverteilerstück (19) und ein Auslassverteilerstück (20), die an jeweiligen axialen Enden des Zylinders (8a) lokalisiert sind, aufweist, wobei das Einlassverteilerstück (19) eine Anzahl von ersten axialen rohrförmigen Elementen (21), die wabenartig angeordnet sind, aufweist und das Auslassverteilerstück (20) eine Anzahl von zweiten axialen rohrförmigen Elementen (22), die wabenartig angeordnet sind und die mit den ersten axialen rohrförmigen Elementen (21) verschachtelt sind, um als ein Ganzes einen zylindrischen Körper zu definieren, der durch eine zylindrische Wand (8a), die durch die individuellen inneren Wände der ersten und zweiten axialen rohrförmigen Elemente definiert ist und den Zylinder definiert, innen begrenzt ist, wobei die inneren Wände des ersten axialen rohrförmigen Elemente (21) Einlassöffnungen (23a), die die Einlassanschlüsse definieren, haben, und die inneren Wände der zweiten axialen rohrförmigen Elemente (22) Auslassöffnungen (23b), die die Auslassanschlüsse definieren, haben.

3. Maschine nach Anspruch 2, wobei die Kolben (3) doppelwirkend sind und in dem Zylinder (8a) jeweilige seitliche Kammern (16) mit variablem Volumen definieren, wobei der Zylinder (8a) weitere Einlass- (24a) und Auslass- (24b) anschlüsse hat, die in abwechselnden Position in jeweiligen ringförmigen Abschnitten des Zylinders (8a), von denen jeder zu einer jeweiligen seitlichen Kammer (16) weist, gebildet sind, wobei die Hülle (14) zwei Gruppen von zweiten Öffnungen (18) hat, wobei die zweiten Öffnungen (18) bei jeder Gruppe um die Achse (7) gleichmäßig beabstandet sind und in einem jeweiligen ringförmigen Abschnitt der Hülle (14), die zu einem jeweiligen ringförmigen Abschnitt des Zylinders (8a) weist, bei dem weitere Einlass- (23a, 24a) und Auslass-(23b, 24b) anschlüsse gebildet sind, gebildet sind, so dass, wenn die Hülle (14) rotiert, jede zweite Öffnung an den Einlassanschlüssen (23a, 24a) und Auslassanschlüssen (23b, 24b) abwechselnd überlagert ist, wobei die zweiten Öffnungen (18) bei jeder Gruppe mit den zweiten Öffnungen (18) bei der anderen Gruppe axial ausgerichtet sind und in Bezug auf die ersten Öffnungen (17) winklig versetzt ist.

4. Maschine nach Anspruch 3, wobei die inneren Wände der ersten axialen rohrförmigen Elemente (21) zwei weitere Einlassöffnungen (24a), die an entgegengesetzten Seiten der relativen Einlassöffnung (23a) lokalisiert sind und weitere Einlassanschlüsse definieren, haben und die inneren Wände der zweiten axialen rohrförmigen Elemente (22) zwei weitere Auslassöffnungen (24b), die an entgegengesetzten Seiten der relativen Auslassöffnung (23b) lokalisiert sind und weitere Auslassanschlüsse definieren, haben.

5. Sich hin und her bewegende Maschine mit positiver Verschiebung, die eine Eingabe-/Ausgabewelle (9), einen festen Zylinder (8a; 26), der eine Achse (7) hat, zumindest einen Kolben (3), der sich in dem Zylinder (8a; 26) hin- und herbewegt, und einen Getriebemechanismus (10), der zwischen der Welle (9) und dem Kolben (3) zwischengefügt ist, um mechanische Leistung von einem zu dem anderen zu übertragen, aufweist, wobei der Zylinder (8a; 26) Einlassanschlüsse (23a, 24a; 27) und Auslassanschlüsse (23b, 24b; 28) für ein Arbeitsfluid hat, und der Getriebemechanismus (10) einen Rotationsabschnitt (11) hat, der koaxial mit der Achse (7) ist und mit der Welle (9) winklig verbunden ist, um mit ihr um die Achse (7) einstückig zu rotieren, wobei der Getriebemechanismus (10) gestaltet ist, um den Rotationsabschnitt (11) um die Achse (7) zu rotieren und den Kolben (3) als Ansprechen auf einen axialen Schub, der an dem Kolben (3) ausgeführt wird, oder ein Drehmoment, das auf die Welle (9) angewendet wird, entlang der Achse (7) gleichzeitig hin- und her zu bewegen, wobei die Maschine (1) eine automatische Timingeinrichtung (2) für ein Arbeitsfluid aufweist, die ein Timingelement (14; 3) aufweist, das in dem Zylinder (8a;26) koaxial mit der Achse (7) lokalisiert ist, zu dem Rotationsabschnitt (11) winklig verbunden ist, um mit ihm um die Achse (7) einstückig zu rotieren, und das in einer rotierenden Weise mit dem Zylinder (8a; 26) verbunden ist, um die Einlassanschlüsse (23a, 24a; 27) und die Auslassanschlüsse (23b, 24b; 28) zyklisch zu öffnen und diese zu schließen, wenn es rotiert,
wobei die Maschine (1) außerdem zwei entgegengesetzte Kolben (3), die sich entlang der Achse (7) in dem Zylinder (8a; 26) hin- und herbewegen, und einen Getriebemechanismus (10) für jeden Kolben (3) aufweist, wobei die rotierenden Abschnitte (11) der zwei Getriebemechanismen (10) an jeweiligen axialen Enden des Zylinders (8a; 26) lokalisiert sind, und miteinander winklig verbunden sind, um synchron zu rotieren,
wobei die Kolben (3) eine Zentrumskammer (15; 32) mit variablem Volumen definieren, die Einlassanschlüsse (23a; 27) und Auslassanschlüsse (23b; 28) in abwechselnden Positionen in einem ringförmigen Abschnitt des Zylinders (8a; 26), der in Richtung der Zentrumskammer (15; 32) weist, gebildet sind,
wobei die Maschine (1) **dadurch gekennzeichnet ist, dass** der Getriebemechanismus (10) gestaltet ist, um die Kolben (3) entlang der Achse (7) hin- und her zu bewegen und die Kolben (3) um die Achse (7) als Ansprechen auf axialen Schub, der an den Kolben (3) ausgeführt wird, oder Drehmoment, das auf die Welle (9) angewendet wird, zu rotieren, wobei das Timingelement durch die zweite Kolben (3) definiert ist, wobei jeder von ihnen mit dem rotierenden Abschnitt (11) des jeweiligen Getriebemechanismus (10) winklig einstückig ist, und an ihrem freien Ende mit zwei diametral gegenüberliegenden Rillen, die sich mit zwei mittleren Aushöhlungen abwechseln, sattelförmig sind, so dass, wenn die Kolben (3) rotieren, die Rillen und Aushöhlungen die Einlassanschlüsse (27) und Auslassanschlüsse (28) zyklisch bedecken und diese enthüllen, und wobei die Kolben (3) winklig versetzt sind, so dass die Rillen jedes Kolbens (3) zu den Aushöhlungen des anderen Kolbens (3) weisen.

6. Maschine nach Anspruch 5, wobei der Zylinder (26) nahe der oberen Totpunktposition der Kolben (3) vier Einspritzungs-/Entzündungsöffnungen (30), die um die Achse (7) gleichmäßig beabstandet sind, hat, wobei die Rillen von jedem Kolben (3) abgeschrägt sind, so dass, wenn die Kolben (3) in deren jeweiligen oberen Totpunktpositionen zusammengeführt sind, eine Lücke (29) zwischen der Rille jedes Kolben (3) und der korrespondierenden Aushöhlung des anderen gebildet ist, wobei die Lücken (29), wenn die Kolben (3) rotieren, gestaltet sind, um sich mit den Einspritzungs-/Entzündungsöffnungen (30) zyklisch auszurichten, um jeweilige Zugänge zu definieren, die eine Einspritzung oder eine Entzündung des Arbeitsfluids, das vorher in die Zentrumskammer (32) eingeführt und in dieser komprimiert wurde, durch externe Einrichtungen zu ermöglichen.

7. Maschine nach Anspruch 5 oder 6, wobei die Kolben (3) mit dem Zylinder (8a ; 26) jeweilige seitliche Kammern (33) mit variablem Volumen definieren, wobei die Maschine (1) außerdem für jeden Kolben (3) ein Einlassverteilerstück (25) zum Zuführen des Arbeitsfluids durch die Einlassanschlüsse (27) zu der Zentrumskammer (32) aufweist, und die Maschine (1) außerdem für jede seitliche Kammer (33) ein Scheibenventil (34) aufweist, das ein jeweiliges Einlassverteilerstück (25) mit der jeweiligen seitlichen Kammer (33) verbindet, und die Einlass- und Lieferungsleitungen des jeweiligen Verteilerstücks (25) abwechselnd öffnet und schließt, um das Verteilerstück (25) als eine Einlasskompressionseinrichtung mit positiver Verschiebung für ein Arbeitsfluid zu betrieben.

8. Maschine nach einem der vorhergehenden Ansprüche, wobei der Getriebemechanismus (10) zusätzlich zu dem rotierenden Abschnitt (11) auch ein mechanisches Getriebe (12), das zwischen dem Kolben (3) und dem rotierenden Abschnitt (11) zwischengefügt ist und mit dem rotierenden Abschnitt (11) winklig verbunden ist, um mit ihm um die Achse (7) zu rotieren, aufweist, wobei der rotierende Abschnitt (11) einen Kastenkörper, der montiert ist, um um die Achse (7) zu rotieren, aufweist und das mechanische Getriebe (12) in dem Kastenkörper zumindest teilweise eingehaust ist.

9. Antriebseinheit, die einen Verbrennungsmotor (42) und eine Abgasexpansionseinrichtung (43) aufweist, die eine sich hin und her bewegende Maschine mit positiver Verschiebung, wie diese in den Ansprüche 1 bis 4 beansprucht ist, aufweist.

## Revendications

1. Machine à déplacement positif alternative comprenant un arbre d'entrée/de sortie (9) ; un cylindre fixe (8a ; 26) ayant un axe (7) ; au moins un piston (3) animé d'un mouvement alternatif à l'intérieur du cylindre (8a ; 26) ; et un mécanisme de transmission (10) interposé entre l'arbre (9) et le piston (3) pour transférer une puissance mécanique de l'un à l'autre ; le cylindre (8a ; 26) comporte des orifices d'admission (23a, 24a ; 27) et des orifices d'échappement (23b, 24b ; 28) pour un fluide de travail, et le mécanisme de transmission (10) comporte une portion rotative (11) coaxiale avec l'axe (7) et raccordée angulairement à l'arbre (9) pour tourner d'un seul tenant avec celle-ci autour de l'axe (7) ; le mécanisme de transmission (10) est conçu pour faire tourner ladite portion rotative (11) autour de l'axe (7) et animer simultanément d'un mouvement alternatif le piston (3) selon l'axe (7) en réponse à une poussée axiale exercée sur le piston (3) ou à un couple appliqué à l'arbre (9) ; la machine (1) comprend un dispositif de distribution automatique de fluide de travail (2) comprenant un organe de distribution (14 ; 3), qui est situé à l'intérieur du cylindre (8a ; 26) coaxial avec l'axe (7), est raccordé angulairement à ladite portion rotative (11) pour tourner d'un seul tenant avec celle-ci autour de l'axe (7), et est raccordé de manière rotative au cylindre (8a ; 26) pour ouvrir et fermer cycliquement les orifices d'admission (23a, 24a ; 27) et les orifices d'échappement (23b, 24b ; 28) lorsqu'il tourne ;
la machine (1) comprend en outre deux pistons opposés (3) animés d'un mouvement alternatif selon l'axe (7) à l'intérieur du cylindre (8a ; 26) ; et un dit mécanisme de transmission (10) pour chaque piston (3) ; les portions rotatives (11) des deux mécanismes de transmission (10) étant situées au niveau d'extrémités axiales respectives du cylindre (8a ; 26), et étant raccordées angulairement l'une à l'autre pour tourner de façon synchrone ;
dans laquelle les pistons (3) définissent une chambre centrale à volume variable (15 ; 32) ; les orifices d'admission (23a ; 27) et les orifices d'échappement (23b ; 28) étant formés, dans des positions alternées, dans une portion annulaire du cylindre (8a ; 26) en regard de la chambre centrale (15 ; 32) ;
dans laquelle les pistons (3) ont un dessus plat, et l'organe de distribution est défini par une gaine cylindrique (14) interposée entre les pistons (3) et le cylindre (8a) et raccordé d'un seul tenant aux deux portions rotatives (11) ;
la machine (1) est **caractérisée en ce que** lesdits orifices d'admission (23a) et lesdits orifices d'échappement (23b) sont espacés de façon régulière autour de l'axe (7), le long de ladite portion annulaire ; la gaine (14) ayant des premières ouvertures (17) espacées de façon régulière autour de l'axe (7) et formées dans une portion annulaire de la gaine (14) en regard de la portion annulaire du cylindre (8a) dans laquelle les orifices d'admission (23a) et les orifices d'échappement (23b) sont formés, de sorte que, lorsque la gaine (14) tourne, chaque première ouverture (17) soit superposée de façon alternée sur les orifices d'admission (23a) et les orifices d'échappement (23b).

2. Machine selon la revendication 1, et comprenant un collecteur d'admission (19) et un collecteur d'échappement (20) situés au niveau d'extrémités axiales respectives du cylindre (8a) ; le collecteur d'admission (19) comprenant un nombre de premiers organes tubulaires axiaux (21) agencés en forme de peigne, et le collecteur d'échappement (20) comprenant un nombre de seconds organes tubulaires axiaux (22) agencés en forme de peigne et qui s'entrelacent avec les premiers organes tubulaires axiaux (21) pour définir, dans leur ensemble, un corps cylindrique délimité à l'intérieur par une paroi cylindrique (8a), qui est définie par les parois intérieures individuelles des premier et second organes tubulaires axiaux et définit ledit cylindre ; les parois intérieures des premiers organes tubulaires axiaux (21) ayant des ouvertures d'admission (23a) définissant lesdits orifices d'admission, et les parois intérieures des seconds organes tubulaires axiaux (22) ayant des ouvertures d'échappement (23b) définissant lesdits orifices d'échappement.

3. Machine selon la revendication 2, dans laquelle les pistons (3) ont un double effet et définissent, dans ledit cylindre (8a), des chambres latérales à volume variable respectives (16) ; le cylindre (8a) ayant des orifices d'admission (24a) et d'échappement (24b) supplémentaires formés dans des positions alternées dans des portions annulaires respectives du cylindre (8a), chacun en regard d'une chambre latérale (16) respective ; la gaine (14) ayant deux groupes de secondes ouvertures (18) ; les secondes ouvertures (18) de chaque groupe étant espacées de façon régulière autour de l'axe (7), et étant formées dans une portion annulaire respective de la gaine (14) en regard d'une portion annulaire respective du cylindre (8a) dans laquelle les orifices d'admission (23a, 24a) et d'échappement (23b, 24b) supplémentaires sont formés, de sorte que, lorsque la gaine (14) tourne, chaque seconde ouverture soit superposée de façon alternée sur les orifices d'admission (23a, 24a) et les orifices d'échappement (23b, 24b) ; les secondes ouvertures (18) de chaque groupe étant alignées axialement avec les secondes ouvertures (18) de l'autre groupe, et décalées angulairement par rapport aux premières ouvertures (17).

4. Machine selon la revendication 3, dans laquelle les parois intérieures des premiers organes tubulaires axiaux (21) ont deux ouvertures d'admission supplémentaires (24a) situées sur des côtés opposés de ladite ouverture d'admission relative (23a) et définissant lesdits orifices d'admission supplémentaires ; et les parois intérieures des seconds organes tubulaires axiaux (22) ont deux ouvertures d'échappement supplémentaires (24b) situées sur des côtés opposés de ladite ouverture d'échappement relative (23b) et définissant lesdits orifices d'échappement supplémentaires.

5. Machine à déplacement positif alternative comprenant un arbre d'entrée/de sortie (9) ; un cylindre fixe (8a ; 26) ayant un axe (7) ; au moins un piston (3) animé d'un mouvement alternatif à l'intérieur du cylindre (8a ; 26) ; et un mécanisme de transmission (10) interposé entre l'arbre (9) et le piston (3) pour transférer une puissance mécanique de l'un à l'autre ; le cylindre (8a ; 26) comporte des orifices d'admission (23a, 24a ; 27) et des orifices d'échappement (23b, 24b ; 28) pour un fluide de travail, et le mécanisme de transmission (10) a une portion rotative (11) coaxiale avec l'axe (7) et raccordée angulairement à l'arbre (9) pour tourner d'un seul tenant avec celui-ci autour de l'axe (7) ; le mécanisme de transmission (10) est conçu pour faire tourner ladite portion rotative (11) autour de l'axe (7) et animer simultanément d'un mouvement alternatif le piston (3) selon l'axe (7) en réponse à une poussée axiale exercée sur le piston (3) ou à un couple appliqué à l'arbre (9) ; la machine (1) comprend un dispositif de distribution automatique de fluide de travail (2) comprenant un organe de distribution (14 ; 3), qui est situé à l'intérieur du cylindre (8a ; 26) coaxialement avec l'axe (7), est raccordé angulairement à ladite portion rotative (11) pour tourner d'un seul tenant avec celle-ci autour de l'axe (7), et est raccordé de manière rotative au cylindre (8a ; 26) pour ouvrir et fermer cycliquement les orifices d'admission (23a, 24a ; 27) et les orifices d'échappement (23b, 24b ; 28) lorsqu'il tourne ;
la machine (1) comprend en outre deux pistons opposés (3) animés d'un mouvement alternatif selon l'axe (7) à l'intérieur du cylindre (8a ; 26) ; et un dit mécanisme de transmission (10) pour chaque piston (3) ; les portions rotatives (11) des deux mécanismes de transmission (10) étant situées au niveau d'extrémités axiales respectives du cylindre (8a ; 26), et étant raccordées angulairement l'une à l'autre pour tourner de façon synchrone ;
dans laquelle les pistons (3) définissent une chambre centrale à volume variable (15 ; 32) ; les orifices d'admission (23a ; 27) et les orifices d'échappement (23b ; 28) étant formés, dans des positions alternées, dans une portion annulaire du cylindre (8a ; 26) en regard de la chambre centrale (15 ; 32) ;
la machine (1) est **caractérisée en ce que** les mécanismes de transmission (10) sont conçus pour animer d'un mouvement alternatif les pistons (3) selon l'axe (7) et également faire tourner les pistons (3) autour de l'axe (7), en réponse à une poussée axiale exercée sur les pistons (3) ou à un couple appliqué à l'arbre (9) ; l'organe de distribution étant défini par les deux pistons (3), dont chacun est d'un seul tenant de façon angulaire avec la portion rotative (11) du mécanisme de transmission (10) respectif, et, au niveau de son extrémité libre, est en forme de selle avec deux crêtes diamétralement opposées alternant avec deux cavités intermédiaires, de sorte que, lorsque les pistons (3) tournent, les crêtes et les cavités couvrent et découvrent cycliquement les orifices d'admission (27) et les orifices d'échappement (28) ; et les pistons (3) étant décalés angulairement, de sorte que les crêtes de chaque piston (3) soient en regard des cavités de l'autre piston (3).

6. Machine selon la revendication 5, dans laquelle, près de la position de point mort haut des pistons (3), le cylindre (26) comporte quatre ouvertures d'injection/d'allumage (30) espacées de façon régulière autour de l'axe (7) ; les crêtes de chaque piston (3) sont biseautées de sorte que, lorsque les pistons (3) sont assemblés dans leurs positions de point mort haut respectives, un écartement (29) soit formé entre la crête de chaque piston (3) et la cavité correspondante de l'autre ; lesdits écartements (29), lorsque les pistons (3) tournent, étant conçus pour s'aligner cycliquement avec lesdites ouvertures d'injection/d'allumage (30) pour définir des accès respectifs permettant l'injection ou l'allumage du fluide de travail, préalablement amené et comprimé à l'intérieur de la chambre centrale (32), par des dispositifs externes.

7. Machine selon la revendication 5 ou 6, dans laquelle les pistons (3) définissent, avec le cylindre (8a ; 26), des chambres latérales à volume variable (33) respectives ; la machine (1) comprend également, pour chaque piston (3), un collecteur d'admission (25) pour amener le fluide de travail à travers les orifices d'admission (27) dans la chambre centrale (32) ; et la machine (1) comprenant également, pour chaque chambre latérale (33), une soupape à disques (34) qui raccorde un collecteur d'admission (25) respectif à la chambre latérale (33) respective, et ouvre et ferme de façon alternée des conduits d'admission et d'apport du collecteur (25) respectif, de façon à faire fonctionner le collecteur (25) en tant que compresseur à déplacement positif d'admission de fluide de travail.

8. Machine selon l'une quelconque des revendications précédentes, dans laquelle, en plus de la portion rotative (11), le mécanisme de transmission (10) comprend également une transmission mécanique (12) interposée entre le piston (3) et la portion rotative (11) et raccordée angulairement à la portion rotative (11) pour tourner avec celle-ci autour de l'axe (7) ; la portion rotative (11) comprenant un corps en caisson monté pour tourner autour de l'axe (7) ; et la transmission mécanique (12) étant logée au moins partiellement dans le corps en caisson.

9. Unité d'entraînement comprenant un moteur à combustion interne (42), et un détendeur de gaz d'échappement (43) comprenant une machine à déplacement positif alternative telle que revendiquée dans les revendications 1 à 4.
